# EUROPEAN PATENT APPLICATION

(11) **EP 1 420 233 A1**
(43) Date of publication of application: **19.05.2004**
(21) Application number: 02025065.0
(22) Date of filing: 12.11.2002
(51) Int. Cl.: G01J 3/52

(54) **Digital color standard**

(71) Applicant: Gretag-Macbeth AG, 8105 Regensdorf (CH)
(72) Inventor: Lamy, Francis, 8702 Zollikon (CH); Senn, Thomas, 8157 Dielsdorf (CH)
(74) Representative: Schwabe - Sandmair - Marx

(57) **Abstract**

The present invention relates to a method for generating a digital color standard system for the generation and reproduction of standardized colors, wherein a color spectrum is divided into a plurality of discrete spectral color values with predetermined gaps and the discrete spectral color values are digitized in order to be processed in accordance with the color standard.

## Description

The invention relates to a method for generating a digital color standard and a digital color standard system for the generation and reproduction of standardized colors, so that it is possible to record colors in a standardized manner wherever and whenever a color has to be reproduced.

In the prior art, publishing and graphical representation has been developed to divise a technique which is digitized as far as possible and which can be perform automatically without involving human beings. In this connection, the work environment in particular of designers has changed. Formally the designer manually drafted his representations and used analog processes. Nowadays, the designer uses digital processes for designing and creating representations which have to be printed out or reproduced in mass printing processes. Nearly all the stages of production of color images or color representations have been digitized, except the handling of colors. Colors are still processed by means of analog information, for instance in the form of analog swatch books including all the available colors within the standard color gamut.

The known types of procedure involve several risks. The manufacturers of different types of recording material, e.g. paper, cardboard, foils and the like, produce particular recording substrates having a variety of color reproduction characteristics. In other words, a particular color which has been printed on a particular kind of white paper provides a particular appearance, while the same color printed on another kind of white paper provides a different appearance.

The same is true for inks coming from different ink manufacturers. The same applies to toner for color copiers and, in addition, different color recording processes, e.g. printing processes, electro-photographical copying processes and the like, bring about different color appearances for the same color on the same paper using the same ink.

Accordingly, there are many reasons for color deviations and therefore, it is an object of the present invention to provide a method which helps to standardize colors for all applications, in particular for the printing industry.

Of course, the same problems also occur in the textile industry, where materials or fabrics have to be treated with colors.

The same applies to the reproduction of artificial teeth, leather, the color of vehicles, the color of furniture, and thus for colors for all kinds of products.

In accordance with the present invention, the shortcomings of the prior art are overcome by means of a method which, in accordance with claim 1, concerns a method comprising the following steps: a color spectrum is divided into a plurality of discrete spectral color values with predetermined gaps between each other; the discrete spectral color values are digitized and the digitized color values are processed, e.g. assigned to color values of images, assigned to inks, transmitted, received, printed out, etc. Surprisingly, the partitioning of the color spectrum into discrete color values and the digilization of these color values provides the possibility of guaranteeing the use of standardized or unified colors wherever and whenever colors have to be reproduced on the basis of an original color which is to be reproduced identically. The invention provides a new possibility for specifying color in the design phase of work and in the management and delivery of these colors throughout the approval and production phase of any kinds of color reproduction processes and in particular for printing processes.

In particular, it is advantageous to provide discrete color values which are equidistant at least over a part of the color spectrum. In other words, in areas of the color spectrum in which the human eye is very sensitive, it is advantageous to divide the color spectrum into discrete spectral color values which are more close than in other spectral color areas in which the human eye is not very sensitive. However, it is recommendable to provide discrete spectral color values which are equidistant in predetermined parts of the spectral color band. Of course, it is also possible to provide discrete spectral color values which are equidistant over the entire visible spectral color band.

On the other hand, it is also advantageous to provide discrete spectral color values which are equidistant to each other with respect to color gamut, since the color gamut defines an area in the color space which contains all the colors which may be reproduced using the primary sources. The reference white is the center of the color gamut area, and colors lying close to this reference white are the less saturated colors. Colors located far from this point are the more saturated colors. If this color gamut is divided into a network of equidistant discrete spectral color values or gamut values and these values are digitized, it is possible to provide a digital color swatch book of all the available colors within a color gamut. If a standard color gamut is defined, it is possible to define a digital standard swatch book for this standard color gamut. It is also possible to develop a plurality of digital color swatch books on the basis of different closed loops through the standard color gamut, providing different colors with the same saturation.

By means of such standardized digital color swatch books, it is possible to provide exactly the same color wherever this color is to be produced or reproduced.

The mathematical means for calculating discrete spectral color values in the color gamut or any other values which could be deemed necessary in the sense of the present invention are well known, and reference is made to a text book including such topics, entitles "Fundamentals of digital image processing", by Anil K. Jain, Prentice Hall information and system science series, Inglewood Cliffs, NY 07632, 1989 (ISBN 0-13-336165-9). The content of this text book is included in the present disclosure by reference.

It is advantageous to adapt the discrete spectral color values or the discrete digital color values, e.g., obtained from the color gamut, to a color recording capability of a particular recording process or a particular color recording device. For instance, an offset printing machine or an offset printing process has different capabilities as compared with an ink jet printing machine or the like. Of course, different offset printing machines and different ink jet printers also have different color reproduction properties and accordingly, it is necessary to adapt the discrete digital color values, for instance retrieved from a standard digital swatch book in accordance with the invention, to the particular color reproducing or recording properties of a particular reproducing or recording process or a particular color recording device.

This, for instance, can be accomplished by means of a spectral measurement device which measures some colors reproduced by a particular color recording process or color recording device, to determine deviations between the colors in a digital standard color swatch book and the actually reproduced or printed colors, in order to define a transformation matrix for adapting the respective color recording process or color recording device to the digital standard color swatch book.

Of course, it is also advisable to adapt the discrete spectral color values and/or the digitized discrete color values to the characteristics of particular recording substrates, for instance a particular print paper, a particular cardboard or the like. In accordance with the present invention, it is possible to determine a particular color which is part of the standard color swatch book and to reproduce this particular color reliably on whatever recording substrate by means of whatever recording process and whatever recording device, merely by means of adapting the particular digital color value from the standard digital color swatch book to the known recording characteristics of the means involved in a reproduction or recording process. For instance, an offset rotation press is used to reproduce a plurality of particular colors on a particular high gloss paper. The characteristics of all these participants in the printing process are known and the colors to be reproduced can be transformed so that the participants in the printing process are able to reproduce corresponding colors fom the digital standard color swatch book without any visible deviations.

Currently, printing companies very often have to refund or credit a share of their charges back to the client because the printed colors are very often incorrect. However, in accordance with the invention, it will be possible to reproduce colors with digital accuracy. Furthermore, different inks or color materials produced by different manufacturers commonly have different color appearances. By means of the invention, it is also possible to determine the characteristics of a particular color material, like an ink, and to additionally take into account these characteristics of the different inks in order to be able to guarantee that a particular standard color value originating from the digital standard color swatch is reproduced identically or at least without any visible deviations.

If an original color is to be identified, it is proposed that particular colors of a particular original are scanned by means of a spectral measurement device, and the particular colors or the spectral color data of the particular colors are assigned to the digitized color values or the digitized color gamut values for further processing.

Of course, it is also possible to use the principles of the present invention for densitometric measurements. It is also possible to digitize densitometric colors and to provide digitized standard densitometric swatch books, and so on. However, an optimized result can only be achieved by means of spectral measurements and by means of a spectral method.

To be sure that the colors can be recorded and reproduced in accordance with the sense of the present invention, it is advantageous to set the discrete color values and/or the digitized discrete spectral color values or the corresponding color gamut values in relation to predefined light conditions.

Accordingly, it is advantageous to set all the participants of a recording and reproduction process in a relation to pre-defined light conditions. For instance, the recording substrate and the recording device, as well as the recording material, such as the ink, should be standardized in relation to standardized pre-defined conditions.

For the processing of the standardized color values, it is advantageous to represent the discrete spectral color values and/or the digitized spectral color values or their corresponding color gamut values by means of at least one reflectance curve specified in regular intervals, e.g. intervals of 10 nm.

According to another important aspect of the present invention, a data carrier such as a CD-ROM, a DVD-carrier, a set of digital data signals, a computer server or the like is provided, carrying data in accordance with the first aspect of the present invention set forth above and as claimed in claims 1 to 13.

In connection with the second aspect of the invention, it is advantageous to store digital color values, in particular in the form of at least one digital color book or digital color swatch book, in the computer server system which is accessible through a data network, in particular from remote terminals.

In the same way, it is beneficial to store color recording characteristics data of a plurality of recording substrates such as paper, plastic foils, cardboard, material or fabric, or whatever solid matter on which color can be recorded, on a computer server system accessible through a data network. Furthermore, it is possible also to store the recording and reproducing characteristics of all other participants in any kind of recording and/or reproduction method, such as printing, electro-photographic copying or the like in order to be able to reproduce a particular color under any circumstances. The same applies to any of the various color reproduction processes, in particular any kind of printing process.

The server is able to combine all the corresponding data to provide particular color reproduction simulation data so that, for instance, a designer anywhere in the world is able to obtain reproduction data for particular colors on a specific recording substrate, for instance a specific white paper, by means of a specific reproduction process, for instance a particular offset printing process, using particular inks of a particular ink producer. Of course, all this information is adapted to specific pre-defined light conditions so that the colors chosen by the designer from a standard digital color swatch book can be reproduced anywhere with an identical color appearance to the human eye.

The designer should be able to access the computer server system in order to be able to browse the modified color data and/or the corresponding color data of the different participants in the recording and reproduction process, i.e. in the present case, an offset printing process. A designer should also be able to browse a modified digital spectral color swatch book so that the designer can use this data even if he is not online with the computer server system according to the invention.

In addition, all manufacturers of color materials, such as ink, toner and the like should be able to access the computer server system according to the invention in order to load specific data regarding new inks and the like. The same should apply to manufacturers of recording and reproduction substrates such as paper, plastic foils and the like.

Accordingly, the computer server system according to the present invention could be used worldwide to provide a standard color swatch book and everybody could access this server, to combine all the participants in a recording and reproduction process on a standard spectral basis so that color deviations are no longer a problem.

In the following, the present invention is described in more detail with reference to the attached drawings and the related parts of the specification, wherein
- Fig. 1: is a schematic representation of accessing a computer server system comprising the digitized standard color system, via a network, e.g. the internet; and
- Fig. 2: is a schematic representation of a model for accessing the server according to the invention.

Over the last decade, the publishing and graphic arts metaphor or counterpart has migrated to full digitization and extreme rationalization, by progressively suppressing the requirement of physical exchange between the participants in the value chain (client, designer, pre-press, printers). The relentless and steady introduction of standards such as Postscript, PDF, ICC, compounded by disruptive technologies such as computer-to-plate and desktop publishing, enabled increased flexibility and created new cycle paces as well as enabling more dedicated, targeted publishing, delivering customer proximity in the time dimension and by better understanding and serving their interests.

For many reasons, partly technological, color has been left out of the electronic and digital rationalization, and even today, color is communicated by means of physical references between the various participants in the graphic arts value chain, until today.

The invention provides the first digital color standard, eliminating the requirement of physical sample exchange, and extending the versatility and flexibility associated with digital technologies to the definition, specification, design and communication of color.

Currently, designers have changed from using manual and analog processes to digital processes for designing and creating work to be printed or delivered in electronic form. The use of desktop applications such as Quark XPress, Adobe Photoshop, Illustrator and InDesign and many other programs has replaced the use of mechanical layouts on art boards and paper. The rationalization process has seaped down through the whole process, embodied in computer-to-plate, softproof and various data formats and other electronic metaphor or equivalent of the previously manual processes.

Despite this profound rationalization and digitization, designers are still using old-fashioned approaches for selecting and communicating critical colors, using books of color swatches printed on coated paper. These use proprietary approaches such as Pantone™, HSX™, HKS™, RAL™ and others. Such approaches have stayed largely unchanged since they were invented, and they are largely unsuitable for modern ways of working digital in agile, media-agnostic environments.

The invention is a new approach for specifying color in the design phase of work, and in the management and delivery of these colors throughout the approval and production phases of printing the reproduction.

The benefits of a digital color standard are as follows:

The invention allows for a far wider and more comprehensive range of colors to be selected within the printing color gamut than by using existing equivalent analog processes. It allows very accurate color selections to be made based upon the chosen printing substrate (paper, cardboard or flexible material), and the printing process to be used. Existing analog processes can take little account of the substrate or color gamut of the printing press to be used. This often leads to incorrect colors being printed, sometimes generating a requirement for refunds or credits to be paid by the printer to the client.

The invention is a software-only standard, adapted to the digital age. It is a system that uses spectral color measurement, the only accurate and physically comprehensive way of measuring and defining color. Colors are measured using a color spectrophotometer. Definition and design of color (in their spectral description) is by means of the invention, e.g. freeware software distributed and licensed across the industry to leading vendors.

The invention can also link up with the integrated spectral color measurement and management systems installed on some presses. This ensures that the same color is consistently printed on the chosen substrate as defined by the designer.

The invention in practice :

The invention comprises at least 5 essential components regrouped under the concept of the invention:
(i) An extensive suite of color palettes, the so-called "digital color books" built by ink and color manufactures, these colors being perceptually equidistant from each other, so that their definition does not suffer from the current limitations often seen in their analog counterpart.
(ii) An extensive suite of substrates characterized in a patent pending unique way, that will enable. Any user of the invention to simulate the rendering of a given ink under pre-defined light conditions.
(iii) An aggregation place acting as a free community resource for designers as a whole.
(iv) Access software delivered in many different vehicles (such as application software) an SDK (software development kit, device drivers to read, write and visualize these palettes.
(v) The color palettes and the individual colors are described in the so-called CxF (Color exchange format), an XML-based spectral color definition format, incorporated by the applicant and proposed as a JDF, CIP4 and ANSI standard. In essence, the CxF format describes the color by means of a reflectance curve that is specified in 10nm intervals.

A digital color book is the digital equivalent of an analog swatch book of all the available colors within the standard color gamut. The digital color book is created by computer software using spectral color information comprising spectral definitions of the relevant color pigments. The traditional analog swatch books are created by mixing such color pigments together to create the specific color inks for printing. It is impossible using such non-digital techniques, to create the full range of all the colors in the digital color book within the color gamut. In an analog system, the creation and printing of the book is the completion of the process, whereas the supplied digital color book is just the start of a far more flexible and comprehensive process. The digital color book is the basis upon which a whole range of custom books can be created.

These custom books are created by first spectrally measuring the substrate to be used. The spectral information about the substrate is then used to adjust the information in the digital color book to create a unique book for that specific substrate. This operation takes just a few minutes on the computer. Any number of such custom books can be created in this way for a wide range of substrates. There will be an IChrome library of standard custom books in accordance with the invention. Custom books can also be created for a specific manufacturer's printing inks to reflect the differences such inks can bring about.

The designer creating the job to be printed selects the critical colors from the custom book to be used, and these are added to the job's color palette using corresponding software of the applicant. If a customer has supplied a sample with a critical color then this is measured using the Eye-One spectrophotometer of the applicant and matched exactly against the correct color in the custom digital color book. The color palette of all the selected colors is then transferred into the page make-up or image manipulation application using a Plug-in or Extension to ensure that the correct colors are used when making up the work. In addition, these colors are transferred into the pre-press workflow and press control systems using a CxF file e.g. the standard XML-based file format for accurate color transfer information). The color monitors of the computers used in the design, pre-press, approval and production stages of the process are all calibrated to give the same accurate viewing results using the Eye-One spectrophotometer and iQ Match software. The proofing printers and printing presses are also calibrated using similar procedures.

When the work is to be output to proof printers or to the press, the data and the CxF file are processed via color management profiles. Ideally, these profiles will have been created using a spectrophotometer and ProfileMaker Pro or equivalent profiling software.

For optimum results, the invention can be integrated into a press sheet color measurement system on the press. Examples of such systems include Heidelberg's CPC24 or SpectroMat of the applicant. This will allow the data from the CxF file with its defined spectral color definitions to be read into these systems. The specific colors defined at the design stage are selected from the press sheet and the press control system then monitors these throughout the press run, ensuring the colors are accurately printed every time.

The invention allows all the participants working in the creation, approval and production processes to work using identical data. The Eye-One Share software of the applicant allows the sharing of color palettes seamlessly among all users. This means that a custom digital color book can be created, or a plurality of such books can be created and distributed to all organizations involved in the process. In a newspaper environment, for example, a newspaper can create its custom digital color book, taking into account its press and the newsprint substrate used, and this can be shared by all advertisers creating adverts to be printed in that newspaper. This ensures that correct colors are printed and consequently no refunds or credits are paid for incorrect printing.

Benefits of the invention, in summary
- The invention is fundamentally more accurate than current, old style analog color swatch book approaches for selecting colors.
- The invention ensures accurate color throughout the process, from color definition by the designer to the delivery of correct colors off the press.
- The invention takes full account of the printing substrates and printing processes to be used, to ensure that colors at all proof stages and off the press are the same as those defined in the design process.
- The invention supports both soft and hard copy proofing.
- The invention ensures that advertizements defined using the system and delivered digitally are printed as defined, meaning the elimination of credits or refunds for incorrectly printed colors.
- The invention is a device-independent solution supporting a wide range of devices and systems for pre-press and printing.
- The invention conforms to industry standards such as ICC, CIP4 and JDF.
- The invention will be the basis for a range of ongoing developments. These are likely to include creating color separations using special colors to optimize the printing process. This could be with four, five, six or more colors.

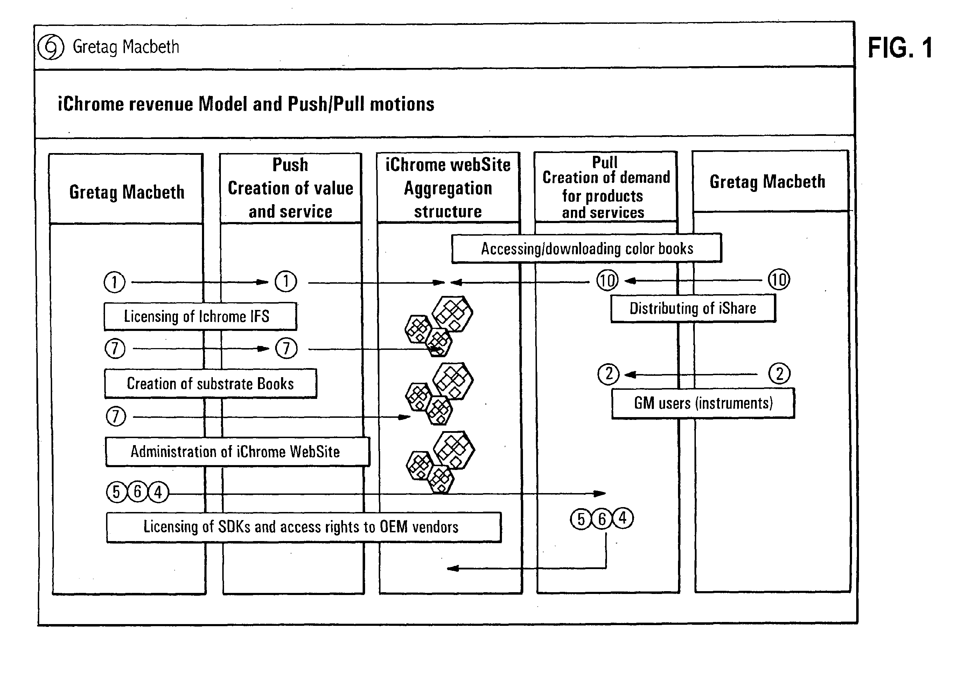

To fully explain and articulate the many benefits of the various participants of the graphics arts value chain, Fig. 1 shows several distinct categories.

### C1: Ink manufacturer (Push)

The ink manufacturer will license a special IFS (ink formulation software) from the applicant, that will enable inks and associated formulations to be defined based on a patent pending perceptual equidistance, and eventually reduced metamerism effects. Ink manufacturers are motivated to create digital color books that will be deposited in an aggregation structure (the website in accordance with the invention), from which they can be accessed -free - by the designers and all other users.

### C2: The applicant's GretagMacbeth installed base and new users (pull)

All current and future users of the applicant's instruments will use the invention seamlessly; all instruments of the applicant will feature a download option that will enable them to download a pre-selected user range of color books for further utilization and comparison (in the same way as SE does today).

### C3: Paper and substrate manufacturers (Push)

One aspect is that the applicant will provide its services to the paper manufactures to enable a characterization of their substrates in accordance with the invention that will enable a visualization of all color book palettes on each of their substrates, under pre-defined light conditions. This is done by a thorough-but simple enough to be industrialized-modelization and characterization of the paper/ink interaction. The fee will enable the papers /substrates to be placed on the website in accordance with the invention and enable all Pull users to visualize the rendition of a given color on a given selected substrate.

### C4: RIP vendors and Output device vendors (Pull):

These will receive SKD and, for a license fee, access to the website in accordance with the invention, from which the digital color book or a color dectionary including a plurality of digital color books can be downloaded. Confronted with device profiles these color books will enable color to be rendered in any desired device-specific color space (sRGB, CMYK...)

### C5: Competitors of the applicant and measurement device manufactures (pull):

These will be permitted, for a minimal fee, to license the SDK corresponding to the invention that will enable spectral data to be fed and exchanged in the same way as GM, using their own instruments.

### C6: Large printing machine manufacturers can be an important potential co-promoter (Pull):

These will be permitted, for a fee, to license the access rights to a website or software according to the invention for all their devices and software. In exchange, HDM will co-promote the concept and push the invention as a standard in the industry standardization bodies (such as CIP4, JDf and others)

### C7: new products, in particular printed products or printing products in accordance with the invention (pull)

### C8: the designers - and their clients- at large (main Pull)

These represent the main pull for promoting as an upgrade option (essentially free) to software in accordance with the invention consisting of plug-ins for Photoshop and QxP extensions, they will be permitted to access the an e-server according to the invention and browse through color books and test renditions of particular colors on selected substrates. Extensions of plug-in(s) will also enable PDM vendors to license access to the web resource according to the invention.

The revenue capture model is very similar to what has been made previously with Adobe and Acrobat and PDF, although the difference in market size should NOT be discounted (this will also carry with it some negative scaling effects, which are not to be neglected).

The bulk of the push will be borne by manufactures of consumables (ink and/or paper), who will draw the most visible and immediate benefit from the concept; it will also also them (the ink & paper manufacturers) to simultaneously offer an enhanced marketing tool and a new type of service to their customers. Paper manufacturers need to be offered a simple procedure and cost/time frame to characterize their substrates.

For establishing the standard, it is important that all members of the PPVC can share the digital color books without any copyright restrictions or limitations as long as the copyright marks of the manufacturer of the digital color book and the applicant's and co-promoter's trademarks are found in the file. The color books are therefore (besides a copyright stamp) not protected against duplication, but quite the opposite.

Redistribution is allowed at any time in any quantities. No charges are applied. The open approach by which we spread the value at no cost will motivate potential users and further accelerate the deployment speed.

The business model is one of a dynamic, aggregation-type self-accelerating vortex-end consumers of the value will be rewarded with aggregation structures and content providers with tollgates: the value proposition is first propagated to the co-promoters (selected vendors and top-tier ink and paper manufactures), then immediately once a minimal aggregation structure is created, a type of software in accordance with the invention is distributed to the creative community - by means of targeted electronic mailing - that has exhibited extremely high positive response rates, to pull demand and further finance the expansion of the network.

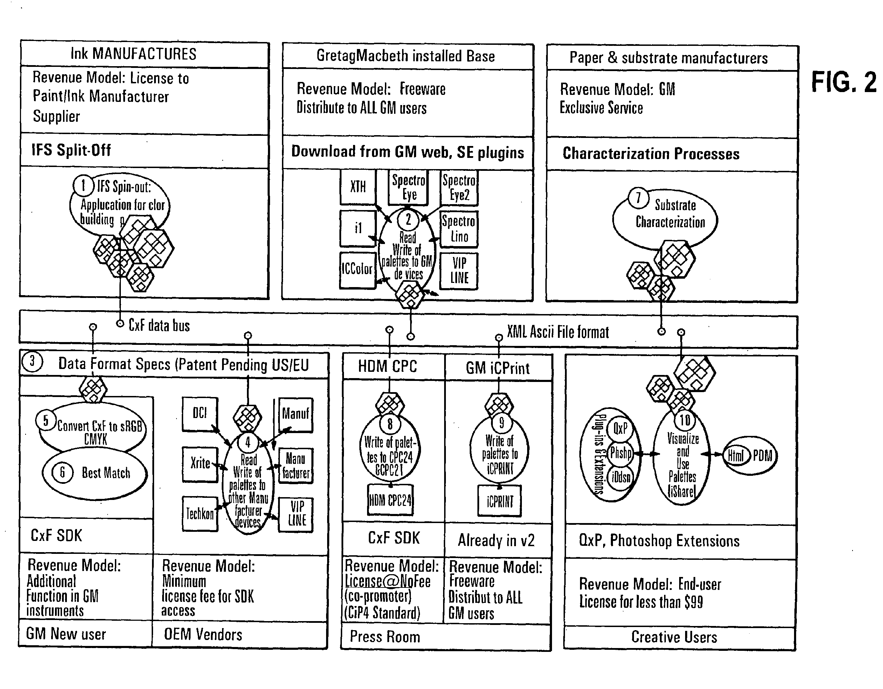

The revenue is collected at five tollgates as can be seen in Fig. 2

### Tollgate 1:

We license the IFSS (special version of the Ink Formulation Software of the applicant) module to generate digital color books for ink manufacturers, substrate manufacturers, for a annually renewable fee. For this license fee, they are allowed to build and distribute as many digital color books as they like. They receive the software and means to distribute the digital color books. Licensees must add a link to the corresponding website in accordance with the invention to their distributions of digital color palette files in accordance with the invention.

### Tollgate 2:

We license the software development kit to support the reading and writing of CxF-compatible data files to every vendor interested in supporting the import and export of CxF-compatible data files. We charge a small fee to every customer using our SDK to cover the seting-up expenses. The developers will have access to all upgrades of the CxF SDK. No further run-time license fees apply. Distribution of applications containing embedded SDK is allowed without any restrictions. Alternatively customers can get a free license to support the CxF standard without using our SDK - this requires registration, though.

The aim is to get the broad support of all soft- and hardware vendors for CxF and to know at any time what products / vendors are supporting the CxF standard. Soft- and hardware vendors will have to integrate a label into their products, showing that the invention has been applied.

### Tollgate 3:

The invention will offer an aggregation place expressed as a website, allowing ink and substrate manufacturers to publish their palette files and substrates. Substrates will be characterized by spectrally measuring the ink absorption characteristics, according to a patent pending process and model. (Through data extracted from black draw-downs using IFS algorithms). Software in accordance with the invention will be the platform for accessing the server and searching for colors and substrates. Customers will be able to check whether a specific color can be made on selected substrates, or alternatively, display substrate types the color can be made on - this can be done by formulation or palette searching -. If the color is checked by formulation, no recipe is displayed. All ink or substrate vendors have to pay a fee to publish their data.

### Tollgate 4:

To customers in the printing industry, we offer a premium web-based formulation service allowing the client server-based formulation (same basic service as tollgate 3, but recipes and corrections are available).

Every user will have the option of storing as many reference values and formulas on the server as he wants).

### Tollgate 5:

Creative customers: will get free access to a set of default palettes and books on the website. An additional more sophisticated set of books will be available at a minimal fee. This fee is then shared with the content providers (the partners who are contributing to bringing color palettes to the server, thus they have an opportunity to quickly recover their license fees)

### Patents and Trademarks:

We have filed a patent protecting the digital creation of color books using ink and/or screen formulation algorithms.

We have filed a patent protecting the exchange of color information using XML encoding.

## Claims

1. A method for generating a digital color standard system for the generation and/or reproduction of standardized colors, wherein
- a color spectrum is divided into a plurality of discrete spectral color values with predetermined gaps between at least some of the discrete spectral color values;
- the discrete spectral color values are digitized; and
- the digitized color values are processed, e.g. assigned to color values of images, transmitted between remote terminals, printed out, etc.

2. The method according to claim 1, wherein the discrete spectral color values and/or the digitized discrete color values are equidistant at least over a part of the color spectrum.

3. The method according to anyone of claims 1 and 2, wherein the discrete spectral color values are equidistant for each other with respect to the color gamut.

4. The method according to anyone of claims 1 to 3, wherein the discrete color values or the digitized spectral color values are adapted to a color recording capability of a particular color recording process and/or a particular color recording device, e.g. an ink jet printer, a rotary printing press, or the like.

5. The method according to anyone of claims 1 to 4, wherein the discrete spectral color values and/or the digital color values are adapted to a particular recording substrate, e.g. a particular kind of paper.

6. The method according to anyone of claims 1 to 5, wherein the discrete spectral color values and/or the digital color values are adapted to a particular recording material, such as an ink, toner or the like.

7. The method according to anyone of claims 1 to 6, wherein particular colors of particular image areas are scanned by means of a spectral measurement device and the particular colors or the spectral color data of the particular colors are assigned to the digitized color values for further processing.

8. The method according to anyone of claims 1 to 7, wherein the discrete spectral color values and/or the digitized color values are set in a relation to pre-defined light conditions.

9. The method according to anyone of claims 1 to 8. wherein the appearance of a discrete spectral color value and/or a digitized color value on a particular recording substrate or recording device is set into a relationship to pre-defined light conditions.

10. The method according to anyone of claims 1 to 9. wherein the discrete spectral color values and/or the digitized color values are represented by means of at least one reflectance curve specified in regular intervals, e.g. intervals of 10 nm.

11. The method according to anyone of claims 1 to 10, wherein the recording substrate which is to be used is being spectrally measured to provide a recording substrate-specific spectral color data set and the discrete spectral color values and/or the digitized color values are adjusted according to said recording substrate-specific spectral color data set.

12. The method according to anyone of claims 1 to 11, wherein at least one color of a specimen is spectrally measured and spectral color data is assigned to a matching discrete spectral color value and/or a matching digitized color value.

13. The method according to anyone of claims 1 to 12, wherein the digitized color values are collected to provide a digital color book of at least one chromaticity.

14. A data carrier or device such as a CD-ROM, a DVD-carrier, a set of digital data signals, a computer server system or the like, wherein said data carrier carries data in accordance with at least one of claims 1 to 13.

15. The data carrier or device according to claim 14, wherein digitized color values, in particular in the form of at least one digital color swatch, are stored in a computer server system being accessible through a data network.

16. The data carrier or device according to anyone of claims 14 or 15, wherein color recording characteristics data of a plurality of recording substrates, such as paper, are stored in said computer server system accessible through a data network.

17. The data carrier or device according to anyone of claims 14 to 16, wherein a computer server system can be accessed in order to combine a standard digital color swatch book or digital standard color data with color recording substrate characteristics, to generate color reproduction simulation data.

18. The data carrier or device according to anyone of claims 14 to 17, wherein color reproduction characteristics data for a plurality of color materials, e.g. ink, toner or the like, are stored in the computer server system to be accessed through the data network in order to retrieve data.

19. The data carrier or device according to anyone of claims 14 to 18, wherein at least two of the following kinds of data can be accessed and/or combined:
- digital standard color swatch book data or digital standard color data;
- color recording characteristics data for recording substrates such as paper;
- color reproduction characteristics data for color materials, such as ink, toner or the like;
- color appearance characteristics data for various color reproducing processes, such as various printing processes, electro-photographical color copying processes, screens or the like;
in order to achieve particular color reproduction simulation data.

20. The data carrier or device according to anyone of claims 14 to 19, wherein color reproduction simulation data can be browsed by a remote terminal.

21. The data carrier or device according to anyone of claims 14 to 20, wherein color recording characteristics data for recording substrates, color reproduction characteristics data for color materials, and/or color appearance characteristics data for various color reproducing processes can be transmitted to the data carrier or device to be stored, in order to be accessible and/or combinable by any remote terminal, to achieve particular color reproduction simulation data.
